# EUROPEAN PATENT APPLICATION

(11) **EP 0 657 774 A1**
(43) Date of publication of application: **14.06.1995**
(21) Application number: 94203290.5
(22) Date of filing: 11.11.1994
(51) Int. Cl.: G03C 1/85, C09K 3/16

(54) **Antistatic coatings**

(30) Priority: 13.12.1993 US 166228
(71) Applicant: MINNESOTA MINING AND MANUFACTURING COMPANY, St. Paul, Minnesota 55133-3427 (US)
(72) Inventor: Carlson, Robert L., c/o Minnesota Mining and, Saint Paul, Minnesota 55133-3427 (US)
(74) Representative: Checcacci, Giorgio

(57) **Abstract**

A coating of a mixture of an alkali metal silicate together with a silica sol and gelatin provides antistatic protection when overcoated with a gelatin-containing photographic construction.

## Description

### Background of the Invention

### Field of the Invention

The present invention relates to the prevention of static buildup on polymeric materials by the addition of antistatic layers to those materials. In particular, the invention relates to antistatic coatings in association with imageable materials.

### Background of the Art

Many different polymeric materials have been long recognized as suffering from electrostatic charge buildup during use. The problems associated with such static charging may be as modest as sparks from moving about on polymeric carpeting and popping sounds on phonograph records or as serious as memory erasure on computer disks and false artifacts in photographic film.

One usual method of reducing static buildup is the addition of a conductive layer or low surface resistivity layer to the polymeric article. It is common in the protection of shaped polymeric articles, including carpets, to treat the polymer with reactive or absorbable salts (e.g., U.S. Pat. 3,309,223 and 4,313,978). It is also known to form layers of inorganic metal oxides, either in film or particulate form to decrease the surface resistivity (e.g., U.S. Pat. 4,203,769 and 4,394,441). These antistatic coatings are known to be particularly desirable and useful as subbing layers in photographic articles (e.g., U.S. Pat. 3,874,879).

Another antistatic layer for photographic materials is described in EPO Application 0 301 827 A2 published February 1, 1989 where a continuous gelled network of inorganic oxide particulates, including silica, are coated onto a substrate along with an ambifunctional silane to increase the wet adhesion of the antistatic layer to gelatin. These coatings tend to lose their antistatic properties when overcoated with a photographic construction because of penetration of gelatin into the pores of the layer.

U.S. Patent No. 5,236,818, having the same inventor and assignee hereof, describes a coating composition comprising sodium orthosilicate, colloidal inorganic oxide particulates such as silica, and a coupling agent (silane) which is applied to substrates to provide an antistatic layer.

Copending U.S. Patent Application Serial No. 08/069,924, filed May 28, 1993, describes a coating composition comprising sodium or potassium metasilicate, colloidal inorganic oxide particulates such as silica, and a coupling agent (silane) which is applied to substrates to provide an antistatic layer.

### Summary of the Invention

A coating composition comprising an alkali metal (e.g., sodium or potassium) silicate (e.g., orthosilicate or metasilicate), colloidal inorganic oxide particulates such as silica, and gelatin is applied to substrates to provide an antistatic layer. The ortho or metasilicate provides an essentially continuous network or phase in the interstices of the colloidal inorganic oxide particles which prevents extensive penetration of the space between the inorganic oxide so that antistatic properties can be maintained, even after a further coating is applied to the antistatic layer. Such further coating may be gelatin layers such as photographic emulsion layers or auxiliary photographic layers.

Previously, silane coupling agents have been used to promote adhesion between the antistatic layer and an overcoated gelatin (e.g., photographic emulsion) layer. Particularly in highly sensitive photographic emulsions (e.g., those that are used in x-ray films), however, such silane coupling agents have been found to cause fogging, i.e., spontaneous development in the absence of light to produce a uniform gray background in the final image. It is believed that silane coupling agents spontaneously react with silver halide to produce elemental (i.e., reduced) silver. The reduced silver, in turn, congretates at nucleation sites in the silver halide grains to produce latent images which, upon development, cause unwanted background darkness or coloration. Such nucleation sites are generally present in highly sensitive photographic emulsions and consist of the reaction product of a sensitizing agent (e.g., a gold compound such as gold chloride and/or a sulfur compound such as sodium thiosulfate) with a silver halide (to produce, e.g., silver sulfide).

In accordance with the present invention, it has been found that replacing silane coupling agents with gelatin avoids fogging in films, especially those employing highly sensitive photographic emulsions. At the same time, the gelatin promotes excellent adhesion between the antistatic layer and an overcoated gelatin-containing layer.

In addition to reduced fogging, the gelatin in the antistatic layer improves the coatability of the antistatic layer, particularly in the absence of a surfactant in the antistatic layer, and improves the stability of the antistatic coating composition prior to coating.

### Detailed Description of the Invention

The antistatic coatings of the present invention are particularly beneficial and capable of a broad range of use at least in part because of their optical transparency when overcoated, water-insolubility, and ability to dissipate a static charge even after being overcoated. Optical transparency is important when the protected substrate or article is to be imaged, viewed, or projected. Water-insolubility is significant where the antistatic layer is a surface layer or the article is to be treated or processed in aqueous solutions. Dissipation of a static charge is an indication of the degree of efficiency which the antistatic layer is capable of providing.

The antistatic protective layer of the present invention comprises a layer of at least three components. The three components are in a single coating composition and comprise: 1) an alkali metal silicate, 2) colloidal inorganic oxide particles such as silica, and 3) gelatin. Preferred alkali metals are sodium and potassium. Potassium silicates are particularly preferred due to their reduced tendency to effloresce and their ability to produce a clearer coating. Silicates which may be used include orthosilicates and metasilicates.

One measurement of antistatic property is the surface resistivity of a coating. The units for measuring surface resistivity are ohms per square. The measurement relates to the ability of the coating to dissipate surface static electric charges. The lower the resistivity, the better that property is. Surface resistivity numbers in the 10⁹ - 10¹¹ ohms/sq range are considered to be 'good' for static protection. Another measurement used in determining antistatic protection is that of charge decay. In measuring this quality, an electric charge (measured in volts) is applied to the surface of the film and the time in seconds for the electric field generated to decay to zero is measured. For excellent static protection, the charge decay time (+5000v to '0') should be less than two seconds, and preferably less than 0.5 second.

In this invention, poorly conductive coatings, such as a gelatin matrix containing, e.g., a photographic silver halide emulsion or an antihalation dye, may advantageously be applied over the antistatic coating. Thus, low surface resistivity is not directly important in this invention because the surface of the antistatic coating is buried under non-conducting materials. Nevertheless, static protection is provided in an indirect manner insofar as the conductive layer is able to neutralize the external electric field of the surface static charges by formation of an internal electric field. This type of protection is effective for, e.g., the prevention of 'static cling' between sheets and with dust particles.

As compared to conventional photographic films in which an antistatic coating is provided as the top coat of the photographic film, the present invention allows the antistatic coating to be placed beneath a gelatin overcoat (e.g., the photographic emulsion layer). This construction is made possible because the alkali metal silicate forms a substantially continuous network or phase in the interstices (i.e., void spaces) of the three dimensional array of colloidal silica particles in the antistatic layer. In the absence of such a silicate network, any nonconductive coating (such as gelatin) applied over the antistatic layer would penetrate the void spaces between the colloidal silica particles and thereby reduce or eliminate the antistatic properties of the antistatic layer by breaking the conductive continuity of the antistatic layer. The silicate network, however, prevents such penetration by a subsequently applied coating and thereby allows the antistatic properties of the present antistatic coating to be maintained. Since antistatic top coats can compromise the photographic performance, handling characteristics, and development of photographic films, the ability of the present antistatic layer to allow a gelatin top coat while maintaining antistatic properties provides a significant advantage over conventional antistatic coatings.

The antistatic coating composition of the present invention is a colloidal inorganic oxide solution or dispersion which preferably comprises finely divided solid silica particles mixed with gelatin and an alkali metal silicate in a liquid. The term "solution" as used herein includes dispersions or suspensions of finely divided particles of ultramicroscopic size in a liquid medium. The solutions used in the practice of this invention are generally clear in appearance.

The average primary particle size of the colloidal silica particles is generally less than 50 nm, preferably less than 20 nm, and more preferably less than 10 nm. Some very useful commercial colloidal silica suspensions have average primary particle sizes less than 7 nm. Colloidal silica suspensions may be stabilized by, e.g., sodium hydroxide or ammonia solutions. Sodium hydroxide is preferred. Examples of commercially available colloidal silica suspensions are Ludox® SM30, Remasol® SP-30, and Nalco 2326.

The gelatin in the antistatic coating promotes adhesion between the antistatic coating and a subsequently-applied gelatin overcoat (e.g., a photographic emulsion). At least a portion of the gelatin molecules in the antistatic coating reside at the upper surface of the antistatic coating. It is believed that one part of the gelatin molecules on the surface of the antistatic coating are embedded within the alkali metal silicate network (which fills the interstices in the three-dimensional array of colloidal silica particles), while the remaining part of each gelatin molecule extends upwards and out of the surface of the antistatic coating. The parts of the gelatin molecules extending from the antistatic coating thus form a plurality of attachment sites to which a subsequently-applied gelatin overcoat can be bonded. Such bonding is facilitated by the use of a cross-linking or hardening agent, preferably in the gelatin overcoat. The cross-linking agent is preferably one which reacts with gelatin, such as formaldehyde or a vinyl sulfone. In this manner, the cross-linking agent helps to bond the antistatic coating with the overcoated gelatin layer by joining the gelatin in the overcoating with the portions of the gelatin molecules in the antistatic coating which extend upwards and into the gelatin overcoat. As a result, a silane coupling agent, with its attendant fogging problems in sensitive films, is not required to bond the antistatic coating with a gelatin overcoat.

To further enhance adhesion of a subsequently-applied gelatin overcoat to the antistatic layer, a polyalkyl acrylate latex may optionally be included in the gelatin overcoating at a polyalkyl acrylate to gelatin weight ratio ranging from 0.05 to 1.0.

Any type of gelatin or equivalent substance may be used in the antistatic coating composition of the present invention. Examples of gelatins which may be used include, without limitation, photographic grades of ossein (bone gelatin) or pigskin gelatin, including derivatized gelatins such as partially phthalated gelatin or gelatins to which have been grafted polymerizable entities. Hydrolyzed gelatins may also be used.

Sodium and potassium silicates are available either as solids (e.g., sodium metasilicate 9-hydrate) or as solutions having various Si0₂:Na₂0 or Si0₂:K₂0 ratios, respectively. Silicates are commercially available from a number of sources, including Eastman Chemical Co. (Rochester, N.Y.), PQ Corporation (Valley Forge, PA), and Hüls America, Inc. (Piscataway, N.J.). Preferably, the alkali metal silicate is a potassium silicate and has a Si0₂:K₂0 weight ratio ranging from 0.5 to 3.0, and more preferably from 1.6 to 2.5.

Any suitable substrate may be used, including films or sheets of polyesters such as poly(ethylene terephthalate), cellulose acetates such as cellulose triacetate, polycarbonates, color print paper such as polyethylene coated paper, etc. Optionally, the substrate may include a priming layer (e.g., a layer containing polyvinylidene chloride) to enhance adhesion between the substrate and the antistatic coating.

The present coating composition preferably contains about 0.5 to 10.0 weight percent, more preferably about 1.0 to 5.0 weight percent solids, expressed as colloidal silica plus alkali metal silicate plus gelatin. At particle concentrations above about 10 weight percent, the resulting coating may have reduced uniformity in thickness and exhibit opacity and reduced adhesion to the substrate surface. Difficulties in obtaining a sufficiently thin coating to achieve increased light transmissivity may also be encountered at concentrations above about 5 weight percent. At concentrations below 0.5 weight percent, process inefficiencies result due to the large amount of liquid which must be removed and beneficial properties may be reduced.

The pH of the coating composition (i.e., the mixture of alkali metal silicate plus colloidal silica plus gelatin) can range from 10.0 to 12.0.

Preferably, the coating composition contains a ratio of colloidal silica to alkali metal silicate, expressed as the Si0₂ content present in the colloidal silica and in the alkali metal silicate, ranging from 1.0 to 10.0. More preferably, the ratio ranges from 2.0 to 6.0. It is also preferred that the coating composition contains an alkali metal silicate to gelatin weight ratio ranging from 0.5 to 10.0, and more preferably from 2.0 to 5.0. The alkali metal silicate in the weight ratio is represented by the Si0₂ content thereof.

The thickness of the applied wet coating solution is dependent upon the concentration of silica particles, alkali metal silicate, and gelatin in the coating solution, and upon the desired thickness of the dried coating. The thickness of the wet coating solution is preferably such that the resulting dried coating thickness is from about 25 to 1000 nm. More preferably, the dried coating is about 100 to 500 nm thick.

The coating solution may optionally contain a surfactant to improve wettability of the solution on the substrate, but inclusion of an excessive amount of surfactant may reduce the adhesion of the coating to the substrate. Suitable surfactants for this system would include compatible surface-tension reducing organic liquids such as n-propanol, and non-ionic surfactants such as those sold under the commercial names of Triton® X-100 and 10G. Generally the surfactant can be used in amounts of up to about 0.5 weight percent of the solution.

Although it is preferred that the antistatic coating composition of the present invention does not include a silane coupling agent, it may, in certain applications, be desirable to include a silane coupling agent (e.g., when the photographic emulsion does not contain sensitizing agents or when fogging is otherwise not of concern). In such applications, the coupling agents may include materials well known in the art, such as ambifunctional silane coupling agents represented by EPO Application 0 301 827 A2. U.S. Pat. No. 4,879,175 also extensively describes coupling agents, particularly commercially available titanate and silane coupling agents.

In each of the following examples, the method used to measure the effectiveness of the antistatic layer employed an ets® Static Decay Meter, Model # 406C, which was utilized to measure the time in seconds for an applied surface electric charge of +5000 volts (+5.0 Kv) to decay to 'zero' (0.0Kv).

### Example 1

Two mixtures labeled 1 and 2 were prepared by adding two 0.45 g portions of inert ossein gelatin (purchased from Rousselot Corp. and Croda Colloids Ltd respectively) to 200 g portions of chilled deionized water and allowing to swell for one hour. The gelatin-water mixture was then heated to 50° C with stirring and when in solution the mixture was cooled to 40° C and maintained at this temperature. A third container labeled #3 contained 200 g of deionized water. The quantity of 5.37 g of a potassium silicate solution (Kasil 2130 from PQ Corp.) was added to each of 1, 2 and 3 above followed by 14.33 g of colloidal silica (Remasol SP-30). Each mixture was coated on photographic polyester primed with poly(vinylidene chloride, ethyl acrylate, itaconic acid). The coatings were made with a #12 wire wound rod and dried in a forced air oven for 2 minutes at 55° C. Each of the coatings was overcoated with the following mixtures.

| | A | B |
|---|---|---|
| x-ray silver halide emulsion | 100 g | 100 g |
| Water | 50 g | 50 g |
| 10% solution of anionic surfactant | 1.0 g | 1.0 g |
| 3.75% formaldehyde solution | 2.0 g | - - |
| 3% vinyl sulfone solution | - - | 10.6 g |

The above mixtures were overcoated using a #24 wire wound rod and drying 2 minutes at room temperature followed by 2 minutes and 55° C. The coatings together with samples that had not been overcoated were conditioned for one hour at 50% Relative Humidity followed by 18 hours at 25% Relative Humidity. A sample of each of the overcoated samples was tested for wet adhesion by immersing a sample in x-ray developer for 30 seconds, removing and placing on a flat surface and while still wet with developer scoring in a cross hatch pattern with the tip of a razor blade and then rubbing the surface vigorously in a back and forth manner 16 times. The adhesion was graded on a 0 to 10 scale where 0 is complete failure and 10 is no failure. Samples were tested for static decay using the ets Static Decay Meter with the measurements made at 25% Relative Humidity. The wet adhesion and static decay results are in the following table.

| **Static Decay and Wet Adhesion Results** | | | |
|---|---|---|---|
| Sample ID | Overcoat | Static Decay (5.0-0.0Kv) | Wet Adhesion |
| 1 | A | .10 sec. | 10 |
| 2 | A | .12 " | 10 |
| 3 | A | .33 " | 0 |
| 1 | B | .19 " | 10 |
| 2 | B | .24 " | 10 |
| 3 | B | .17 " | 0 |

The above results demonstrate the effect of the gelatin addition in giving excellent wet adhesion whereas its omission results in complete adhesion failure.

### Example 2

A solution of 0.30 g of Croda inert bone gelatin was prepared in 200 g of deionized water and maintained at 40° C. A 7.17 g amount of a potassium silicate solution (Kasil 1624 sold by PQ Corp.) was added followed by 11.15 g of colloidal silica (Remasol SP-30). This mixture was coated on 7 mil polyester primed with poly (vinylidene chloride, ethyl acrylate, itaconic acid). The coating was made with a #12 wire wound rod and dried 2 minutes at 55° C. A sample of the above coating was overcoated with the mixture below using a #24 wire wound rod and dried 2 minutes at room temperature followed by 2 minutes at 55° C.
x-ray emulsion - 100 g
DI water - 50 g
3% vinyl sulfone - 10.6 g
10% surfactant - 1.0 g
The resultant coating was tested for wet adhesion by immersing in x-ray developer for 30 seconds, removing, and while wet with developer scoring in a cross hatch pattern with a razor blade and vigorously rubbing in a back and forth motion 16 times. No evidence of adhesion failure was noted. Samples were conditioned at 25% Relative Humidity for 18 hours and then read on the ets Static Decay Meter. The samples were then conditioned at 10% Relative Humidity and reread.

| **ets Static Decay Measurements (5.0 - 0.0Kv)** | | |
|---|---|---|
| Coating Description | Decay Time (25% R.H.) | Decay Time (10% R.H.) |
| (silicate + silica + gel) w/overcoat | 0.05 sec. | .11 Sec. |
| (silicate + silica + gel) w/o overcoat | .16 sec. | very slow decay |
| standard base w/overcoat | ∞ | ∞ |
| Note: ∞ designates behavior of an insulator. | | |

### Example 3

A solution of 0.45 g of Croda inert bone gelatin in 50 g of deionized water was prepared and maintained at 40° C. A solution of 1.71 g of sodium metasilicate (Na₂Si0₃) in 130 g deionized water was heated to 40° C and added with stirring to the above gelatin solution followed by the addition of 13.5 g of colloidal silica (Remasol SP-30). A second mixture was prepared in which the sodium metasilicate was replaced by 2.40 g of Na₂Si0₃·9H₂0 (Eastman Chemical). The two mixtures were coated and then overcoated with an x-ray emulsion as described in Example 2. Tests for wet adhesion in x-ray developer gave no evidence of failure on either sample. The samples were then equilibrated for 18 hours at 25% Relative Humidity and the static decay read on the ets Static Decay Meter.

| **ets Static Decay Measurements (5.0 - 0.0Kv)** | |
|---|---|
| Coating Description | Decay Time (25% RH) |
| (Na₂Si0₃ + silica + gel) w/overcoat | .09 sec. |
| (Na₂Si0₃·9H₂0 + silica + gel) w/overcoat | .05 sec. |
| (Na₂Si0₃ + silica + gel) w/o overcoat | .05 sec. |
| (Na₂Si0₃·9H₂0 + silica + gel) w/o overcoat | .10 sec. |

The above results show excellent static decay both before and after overcoating with the photo emulsion.

### Example 4

The mixture described in Example 2 was prepared with the exception that 0.45 g of phthalated gelatin (Rousselot Corp.) was substituted for the 0.30 g of the inert bone gelatin. The coating and emulsion overcoat were made in the manner described in Example 2. Tests for wet adhesion in x-ray developer gave no evidence of failure. Samples were conditioned for 24 hours at 25% Relative Humidity and the static decay measured on the ets Static Decay Meter. The static decay time for decay from 5.0 to 0.0 Kv was measured as 0.07 seconds.

### Example 5

The mixture described in Example 2 was prepared with the exception that 0.45 g of pigskin gelatin (Stoess Gmbh.) was substituted for the 0.30 g of the inert bone gelatin. The coating and overcoat were made as described in Example 2. Tests for wet adhesion in x-ray developer gave no evidence of adhesion failure. Samples were conditioned for 24 hours at 25% Relative Humidity and the static decay measured on the ets Static Decay Meter. The static decay time for decay from 5.0 to 0.0 Kv was measured as .09 seconds.

### Example 6

A solution of 0.47 g of inert ossein gelatin (Croda Colloids Ltd.) in 200 g of deionized water was prepared by the method described in Example 1. A quantity of 7.17 g of a potassium silicate solution (Kasil 1624 sold by PQ Corp.) was added to the above gelatin solution followed by 23.5 g of colloidal silica (NYACOL 215 sold by Nyacol Products Inc.). The mixture was coated on photographic grade polyester primed with poly (vinylidene chloride, ethyl acrylate, itaconic acid) using a #12 wire wound rod and drying 2 minutes at 55° C. The above coating was overcoated with the emulsion B described in Example 1. The wet adhesion and static decay were measured by the methods described in Example 1. The results are given in the following table.

| **Static Decay and Wet Adhesion Results** | |
|---|---|
| Static Decay (5.0 to 0.0 Kv) | Wet Adhesion |
| .16 seconds | 8 |

## Claims

1. A method for providing an antistatic protection layer onto a substrate comprising:
a) providing a coating composition of a colloidal silica, an alkali metal silicate, and gelatin;
b) coating said composition onto said substrate; and
c) drying said composition.

2. The method of Claim 1 wherein said coating composition contains a colloidal silica to alkali metal silicate ratio, expressed as the Si0₂ content present in the colloidal silica and in the alkali metal silicate, ranging from 1.0 to 10.0.

3. The method of Claim 1 wherein said coating composition contains an alkali metal silicate to gelatin weight ratio ranging from 0.5 to 10.0, the alkali metal silicate in said weight ratio being represented by the Si0₂ content thereof.

4. The method of Claim 1 wherein said antistatic protection layer is overcoated with a gelatin matrix.

5. An antistatic film base comprising a polymeric film substrate having as a coating on at least one surface thereof a dry composition of colloidal silica particles, alkali metal silicate, and gelatin.

6. The film base of Claim 5 wherein said alkali metal is potassium or sodium.

7. The film base of Claim 5 wherein said silicate is orthosilicate or metasilicate.

8. The film base of Claim 5 wherein said coating contains a colloidal silica to alkali metal silicate ratio, expressed as the Si0₂ content present in the colloidal silica and in the alkali metal silicate, ranging from 1.0 to 10.0.

9. The film base of Claim 5 wherein said coating contains an alkali metal silicate to gelatin weight ratio ranging from 0.5 to 10.0, the alkali metal silicate in said weight ratio being represented by the Si0₂ content thereof.

10. The film base of claim 5 wherein said coating is overcoated with a gelatin matrix.
